# EUROPÄISCHE PATENTSCHRIFT

(11) **EP 2 468 083 B1**
(45) Veröffentlichungstag und Bekanntmachung des Hinweises auf die Patenterteilung: **16.04.2014**
(21) Anmeldenummer: 11009999.1
(22) Anmeldetag: 20.12.2011
(51) Int. Cl.: A01B 59/041

(54) **Stabilisator für einen Unter- und/oder Oberlenker eines Ackerschleppers**
Stabiliser for upper and/or lower top link of a farm tractor
Stabilisateur pour les bras supérieures et/ou inférieures d'un tracteur agricole

(30) Priorität: 21.12.2010 DE 202010016822 U; 16.02.2011 DE 202011002815 U
(43) Veröffentlichungstag der Anmeldung: 27.06.2012
(73) Patentinhaber: JRS GmbH & Co. KG, 85119 Ernsgaden (DE)
(72) Erfinder: Sauermann, Hans, 85119 Ernsgaden (DE)
(74) Vertreter: Witzany, Manfred

(56) Entgegenhaltungen:
- EP-A1- 1 084 601
- EP-A1- 1 342 399
- EP-A2- 2 232 973
- WO-A1-98/34460

## Beschreibung

Die Erfindung betrifft einen Stabilisator für einen Unter- und/oder Oberlenker einer Drei-Punkt-Aufhängung eines Ackerschleppers gemäß dem Oberbegriff des Patentanspruchs 1.

Aus der DE 199 44 749 A1 ist ein Stabilisator für einen Unterlenker eines Ackerschleppers bekannt. Dieser Stabilisator weist ein Teleskop auf, welches von einem Rohr und einem darin laufenden Kolben gebildet ist. Zwischen beiden ist eine Feder vorgesehen, die den Kolben mit dem Rohr elastisch koppelt. Der Kolben ist zweistückig ausgebildet, wobei beide Teile mittels eines Gewindes gegeneinander verstellbar sind. Auf diese Weise ist die Kolbenlänge einstellbar. Dies ist wichtig, um die Länge des Stabilisators an die jeweiligen Bedürfnisse anpassen zu können. Um das Teleskop für die Fahrt auf einer öffentli6chen Straße zu sperren, ist am Rohr ein Arretierbügel schwenkbar gehalten, der ein Widerlager des Kolbens übergreift. Dieser Stabilisator hat sich in der Praxis vielfach bewährt.

Aus der EP 1 342 399 A1 ist ein gattungsgemäßer Stabilisator bekannt. Dieser Stabilisator dient zur Stabilisierung eines Unter- und/oder Oberlenkers einer Drei-Punkt-Aufhängung eines Ackerschleppers. Der Stabilisator weist ein Teleskop auf, welches aus einem Rohr und einem darin verschiebbar gehaltenen Kolben besteht. Diese sind miteinander durch eine Feder elastisch gekoppelt. Der Kolben ist mittels eines Gewindes durch Drehen längenverstellbar. Am Rohr ist außerdem ein Arretierbügel schwenkbar gehalten, der in einer Arretierstellung ein Widerlager des Kolbens übergreift. Dieser Arretierbügel ist in eine Lösestellung überführbar, in der das Teleskop frei bewegbar ist.

Der Erfindung liegt die Aufgabe zugrunde, einen Stabilisator der eingangs genannten Art zu schaffen, der sich durch eine einfachere Handhabung auszeichnet.

Diese Aufgabe wird erfindungsgemäß mit den Merkmalen des Patentanspruchs 1 gelöst.

Der Stabilisator gemäß Anspruch 1 dient hauptsächlich für Unterlenker, ist jedoch auch für Oberlenker einer Drei-Punkt-Aufhängung geeignet. Der Stabilisator hat die wesentliche Aufgabe, eine Seitenbewegung des Unter- bzw. Oberlenkers durch Federwirkung zu korrigieren. Damit ist eine schwimmende Ankupplung des daran befestigten Arbeitsgerätes möglich, was beispielsweise bei einem Pflug unerlässlich ist. Um dieser Aufgabe gerecht zu werden, weist der Stabilisator mindestens ein Teleskop auf, welches von einem Rohr und einem darin verschiebbar gehaltenen Kolben gebildet ist. Der Kolben und das Rohr sind durch mindestens eine Feder elastisch gekoppelt. Bei einer seitlichen Schwenkbewegung des Unter- bzw. Oberlenkers wird der Stabilisator gestaucht bzw. gedehnt, was zu einer entsprechenden Federkraft führt. Auf diese Weise wirkt der Stabilisator der Seitenbewegung elastisch entgegen, ohne sie vollends zu unterbinden. Ein mit der Drei-Punkt-Aufhängung des Ackerschleppers verbundenes Arbeitsgerät wird dadurch elastisch geführt. Da unterschiedliche Arbeitsgeräte sehr unterschiedliche Breiten aufweisen können, ist es erforderlich, den Stabilisator in seiner Länge einzustellen. Diese Längenverstellbarkeit kann dabei nicht durch das Teleskop selbst erfolgen, da sich sonst der Arbeitspunkt der Feder erheblich mit der Breite des Anbaugerätes verstellen würde. Um diese Einstellbarkeit zu erzielen, ist der Kolben zweigeteilt und durch mindestens ein Gewinde längenverstellbar. Damit kann durch Drehen eines Teiles des Kolbens die Kolbenlänge derart eingestellt werden, dass der Stabilisator an die jeweiligen Bedürfnisse des Anbaugerätes angepasst werden kann. Der Stabilisator übt damit auf den Unter- bzw. Oberlenker der Drei-Punkt-Aufhängung des Ackerschleppers eine elastische Kraft aus, die das Anbaugerät bei zunehmender seitlicher Ausschwenkung gegenüber dem Ackerschlepper wieder in die gewünschte Spur zurück holt. Trotzdem kann das Anbaugerät seitliche Bewegungen ausführen, damit ein Pflug beispielsweise einem Stein im Boden ausweichen kann. Dieses während des Betriebes auf dem Feld erforderliche Verhalten des Anbaugeräts ist während der Überführung des Ackerschleppers im öffentlichen Straßenverkehr problematisch. Insbesondere bei Kurvenfahrten kann es zum Ausschwenken des Anbaugerätes kommen, wodurch der öffentliche Straßenverkehr in unzulässiger Weise gefährdet würde. Aus diesem Grund ist es erforderlich, dass das Teleskop des Stabilisators im öffentlichen Straßenverkehr blockiert ist. Damit wird eine Schwenkbewegung der Unter- bzw. Oberlenker der Drei-Punkt-Aufhängung des Ackerschleppers zuverlässig unterbunden. Um diese Arretierung auf einfache Weise realisieren zu können, ist am Rohr mindestens ein Arretierbügel schwenkbar gehalten. Dieser Arretierbügel übergreift in einer Arretierstellung mindestens ein Widerlager des Kolbens. Als Arretierstellung ist dabei jede Stellung zu verstehen, in der das Teleskop wenigstens teilweise blockiert ist. Eine geringe Bewegbarkeit des Teleskops in der Arretierstellung spielt keine Rolle. In einer Lösestellung beeinflusst der Arretierbügel dagegen das Teleskop nicht, so dass es unter der Wirkung der mindestens einen Feder bewegbar ist. Damit wird der Stabilisator sowohl den Bedürfnissen des Betriebs auf dem Feld als auch im öffentlichen Straßenverkehr gerecht.

Um die Länge des Kolbens des Stabilisators einzustellen, war es bei bekannten Stabilisatoren erforderlich, den Arretierbügel in die Lösestellung zu verschwenken und anschließend den Kolben so weit zu verdrehen, dass er durch die Wirkung des Gewindes die gewünschte Länge einnimmt. In der Lösestellung des Arretierbügels ist es jedoch für die bedienende Person nicht mehr einfach zu erkennen, welche konkrete Länge der Kolben einnehmen soll. Aus diesem Grund musste die Verstellung der Kolbenlänge mehrfach unterbrochen werden, um durch Verstellen des Arretierbügels in die Arretierstellung eine Überprüfung der Kolbenlänge zu ermöglichen.

Zur Lösung dieses Problems ist vorgesehen, dass das Widerlager des Rohres von mindestens einer im Wesentlichen rotationssymmetrischen Scheibe gebildet ist. Damit ist der Kolben unabhängig von der Drehlage des Kolbens. Auf diese Weise kann die Verstellung der Kolbenlänge in der Arretierstellung des Arretierbügels erfolgen. In dieser ist allerdings das Teleskop arretiert, so dass das Erreichen der korrekten Kolbenlänge unmittelbar und ohne weitere Maßnahmen sichtbar ist. Damit ist die Verstellung der Kolbenlänge erheblich vereinfacht und muss insbesondere nicht durch ein umständliches Überführen des Arretierbügels in die Arretierstellung und anschließend wieder in die Lösestellung unterbrochen werden. Alternativ kann die Verstellung der Kolbenlänge auch nahe der Arretierstellung erfolgen. Haben die Eingriffsflächen des Kolbens und des Arretierbügels einen Abstand von höchstens 5 mm, kann die Einstellung der Kolbenlänge immer noch genau genug überprüft werden.

Um ein unerwünschtes Verstellen der Drehlage des Kolbens zu verhindern, ist es gemäß Anspruch 2 günstig, wenn am Kolben mindestens ein Verriegelungsbügel angreift, der mit dem Widerlager oder einem weiteren Widerlager des Rohres oder Kolbens zusammenwirkt, um eine Drehung des Kolbens zu verhindern. Ist nur ein weiteres Widerlager vorgesehen, welches mit dem Verriegelungsbügel zusammenwirkt, so kann der Kolben nur um ganzzahlige Vielfache der Gewindesteigung verstellt werden. Dies ist oftmals nicht ausreichend, so dass eine einfühligere Verstellung wünschenswert ist. In diesem Fall werden mindestens zwei Verriegelungsbügel und/oder mindestens zwei weitere Widerlager vorgesehen, um auf diese Weise die Verstellmöglichkeit auf ganzzahlige Vielfache der halben Gewindesteigung zu erweitern. Sind mindestens vier weitere Widerlager vorgesehen, so kann die Feinfühligkeit der Verstellung noch weiter auf ganzzahlige Vielfache einer Viertelgewindesteigung verbessert werden.

Zur weiteren Verbesserung der Handhabung des Stabilisators ist es gemäß Anspruch 3 vorteilhaft, wenn der Verriegelungsbügel in eine Betätigungsstellung verschwenkbar ist, so dass der Verriegelungsbügel als Handhabe zum Verdrehen des Kolbens verwendbar ist. Auf diese Weise ergibt sich ein langer Hebel, um den Kolben zu verdrehen. Dies erleichtert das Verdrehen des Kolbens, da zum Aufbringen der notwendigen Drehmomente nur relativ geringere Kräfte erforderlich sind. Außerdem wird auf diese Weise der Verriegelungsbügel doppelt genutzt.

Um zu verhindern, dass sich der Verriegelungsbügel selbsttätig beispielsweise während der Fahrt löst, ist es gemäß Anspruch 4 vorteilhaft, wenn das weitere Widerlager des Verriegelungsbügels von einem federnd gehaltenen Druckknopf gebildet ist. Dieser Druckknopf ist federnd nach außen belastet und durch Druck nach Innen verdrehbar. Damit wird verhindert, dass Gegenstände wie Äste oder dgl. versehentlich die Verriegelung des Verriegelungsbügels lösen können.

Der Druckknopf ist gemäß Anspruch 5 in eine Verriegelungsstellung bringbar, in der der Verriegelungsbügel festgelegt ist. Außerdem ist er in eine Lösestellung bringbar, in der der Verriegelungsbügel verschwenkbar ist. Vorzugsweise erfolgt die Überführung des Druckknopfs von einer Stellung in die andere durch Verdrehen um seine Achse.

Soll das Widerlager selbst als Verdrehsicherung des Kolbens genutzt werden, so ist es gemäß Anspruch 6 vorteilhaft, wenn das Widerlager zur Aufnahme des Verriegelungsbügels abgeflacht bzw. eingekerbt ist. Durch diese geringfügige Abweichung von der idealen Rotationssymmetrie des Widerlagers im Erfassungsbereich des Verriegelungsbügels ergibt sich eine sichere Drehmomentübertragung vom Verriegelungsbügel auf das Widerlager und damit auf den Kolben. Dabei ist sichergestellt, dass der Verriegelungsbügel in seiner Verriegelungsstellung das Widerlager verdrehsichert, während in der Freigabestellung des Verriegelungsbügels das Widerlager frei drehbar ist. Insbesondere kann dabei der Arretierbügel in seiner Arretierstellung verbleiben, ohne das Verdrehen des Widerlagers und damit des Kolbens zu beeinträchtigen. Entsprechend den Ausführungen zum Anspruch 2 kann eine feinere Längenverstellung dadurch erzielt werden, dass die Abflachungen bzw. Einkerbungen im Widerlager mehrfach vorgesehen sind. Vorzugsweise sind mindestens zwei Abflachungen oder Einkerbungen vorgesehen. Für eine besonders feinfühlige Verstellung des Stabilisators ist es vorteilhaft, wenn mindestens vier Abflachungen oder Einkerbungen vorgesehen sind.

Um einer Beschädigung des Widerlagers bzw. des Arretierbügels vorzubeugen, ist es gemäß Anspruch 7 günstig, wenn der Arretierbügel mindestens eine Anschlagfläche aufweist, die das Widerlager des Kolbens flächig erfasst. Damit werden Schlagkräfte auf eine größere Fläche verteilt, was die Kerbwirkung im Widerlager bzw. im Arretierbügel entsprechend reduziert.

Gemäß Anspruch 8 ist es vorteilhaft, wenn der Arretierbügel mindestens zwei Anschlagflächen aufweist, die das Widerlager des Kolbens beidseitig flächig erfassen. Damit werden Kerbwirkungen sowohl bei Zug- als auch Schubkräften klein gehalten.

Der Arretierbügel ist notwendigerweise im Bereich des scheibenförmigen Widerlagers geschwächt, während er beidseits des Widerlagers dieses übergreift. Zur Verhinderung eines Bruchs des Arretierbügels im Bereich des Widerlagers ist es daher gemäß Anspruch 9 zweckmäßig, wenn der Arretierbügel dort verstärkt ist. Als Verstärkung wird insbesondere ein keilförmiger Ansatz vorgeschlagen.

Schließlich ist es gemäß Anspruch 10 günstig, wenn der Verriegelungsbügel gegenüber dem Kolben verdrehbar und über mindestens eine Ratsche verbindbar ist. Damit kann der Kolben auch unter beengten Platzverhältnissen verdreht werden, wenn beispielsweise eine volle Umdrehung des Verriegelungsbügels in dessen Betätigungsstellung nicht möglich ist. In diesem Fall reicht eine Verstellung des Verriegelungsbügels um einen gewissen Winkel, wobei anschließend der Verriegelungsbügel wieder ohne Beeinflussung der Stellung des Kolbens in seine ursprüngliche Stellung zurück überführt wird.

Soll nicht der Verriegelungsbügel selbst zum Verdrehen des Kolbens herangezogen werden, ist es gemäß Anspruch 11 vorteilhaft, mindestens vier Schlüsselflächen an Kolben vorzusehen. An diese kann ein Gabelschlüssel zum Verdrehen des Kolbens angesetzt werden. Nach einer Drehung um 90° kann der Gabelschlüssel erneut angesetzt werden, um eine Verstellung des Stabilisators auch unter beengten Verhältnissen zu ermöglichen.

Der Erfindungsgegenstand wird beispielhaft anhand der Zeichnung erläutert, ohne den Schutzumfang zu beschränken.
- Figur 1: zeigt eine räumliche Darstellung eines Stabilisators für einen Ackerschlepper,
- Figur 2: eine zugeordnete Schnittdarstellung des Stabilisators gemäß Figur 1 und
- Figur 3: eine räumliche Darstellung einer zweiten Ausführungsform eines Stabilisators.

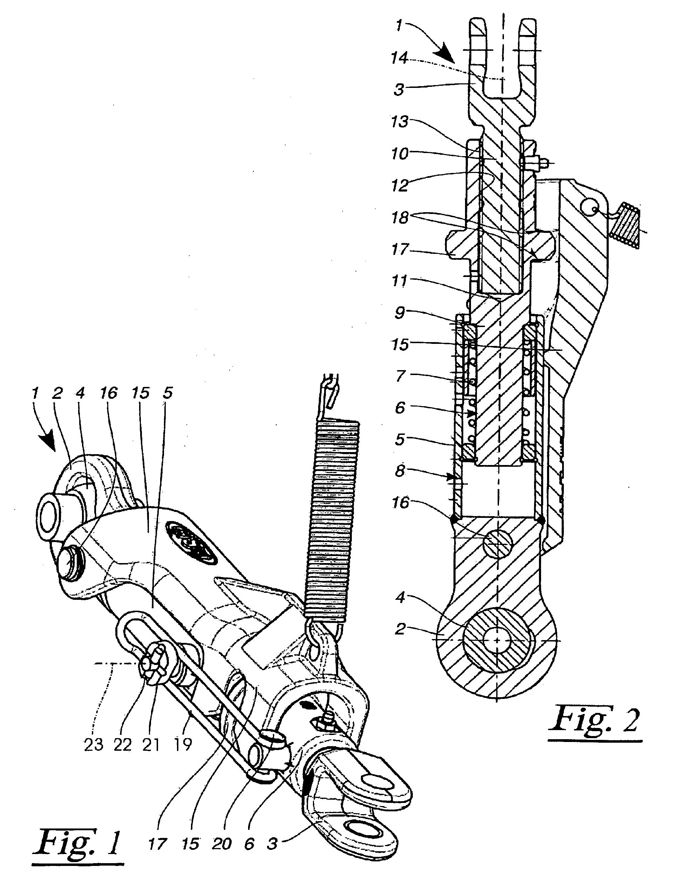

Ein Stabilisator 1 gemäß den Figuren 1 und 2 weist ein erstes Lager 2 und ein zweites Lager 3 auf. Üblicherweise wird das erste Lager 2 am Heck eines Ackerschleppers über eine Kugel 4 gehalten, während das zweite Lager 3 mit einem nicht dargestellten Unter- und/oder Oberlenker verbunden wird. Damit kann der Stabilisator 1 eine seitliche Bewegung des Unter- bzw. Oberlenkers beeinflussen.

Der Stabilisator 1 besteht aus einem Rohr 5, welches mit dem ersten Lager 2 verbunden ist. Im Rohr 5 ist ein Kolben 6 verschiebbar abgestützt. Zwischen dem Rohr 5 und dem Kolben 6 ist eine Feder 7 vorgesehen, die eine elastische Kopplung zwischen dem Rohr 5 und dem Kolben 6 erzeugt. Das Rohr 5 und der Kolben 6 bilden ein Teleskop 8, das eine gewisse Längenvariation des Stabilisators 1 erlaubt.

Der Kolben 6 ist zweistückig ausgebildet. Er besteht aus einem ersten Teil 9, an dem die Feder 7 angreift und einem zweiten Teil 10, das das zweite Lager 3 trägt. Im ersten Teil 9 des Kolbens 6 ist eine Sackbohrung 11 mit einem Innengewinde 12 vorgesehen, welches ein Außengewinde 13 des zweiten Teils 10 aufnimmt. Ist das zweite Lager 3 am Unter- bzw. Oberlenker festgelegt, so lässt es sich nicht um seine Längsachse 14 verdrehen. Durch Verdrehen des ersten Teils 9 des Kolbens 6 kann jedoch die Kolbenlänge entsprechend den jeweiligen Bedürfnissen eingestellt werden.

Um während der Fahrt im öffentlichen Straßenverkehr ein unerwünschtes Ausschwenken des Unter- bzw. Oberlenkers zuverlässig zu vermeiden, ist es notwendig, die Teleskopierbarkeit des Stabilisators 1 in diesem Anwendungsfall zu blockieren. Zu diesem Zweck ist am Rohr 5 ein Arretierbügel 15 um eine Achse 16 schwenkbar gehalten. Dieser Arretierbügel 15 übergreift ein als Scheibe ausgebildetes Widerlager 17 des Kolbens 6 beidseitig. Zu diesem Zweck weist der Arretierbügel 15 zwei Anschlagflächen 18 auf, die flächig am Widerlager 17 in der dargestellten Arretierstellung des Arretierbügels 15 anliegen. Der Arretierbügel 15 kann außerdem in einer nicht dargestellten Lösestellung verschwenkt werden, in der die Anschlagflächen 18 außer Eingriff mit dem Widerlager 17 verbunden sind. In dieser Stellung ist das Teleskop 8 frei bewegbar.

Um ein Verdrehen des ersten Teiles 9 des Kolbens 6 um seine Längsachse 14 auch in der Arretierstellung des Arretierbügels 15 zu ermöglichen, ist das Widerlager 17 im Wesentlichen rotationssymmetrisch ausgebildet. Damit kann jederzeit geprüft werden, ob der Stabilisator 1 bereits korrekt in seiner Länge eingestellt ist.

Um zu verhindern, dass der Kolben 6 unbeabsichtigt in seiner Länge verstellt wird, ist am Kolben 6 ein Verriegelungsbügel 19 schwenkbar abgestützt. Dieser Verriegelungsbügel 19 ist um eine Achse 20 verschwenkbar und kann in eine in Figur 2 dargestellte Verriegelungsstellung gebracht werden. In dieser Verriegelungsstellung übergreift der Verriegelungsbügel 19 ein weiteres Widerlager 21. Hierdurch wird eine Verdrehung des Kolbens 6 unterbunden, wobei die Teleskopierbarkeit des Stabilisators 1 je nach Stellung des Arretierbügels 15 möglich oder unterbunden ist. Das weitere Widerlager 21 besteht aus einem Druckknopf 22, der federnd vom Kolben 6 radial weggedrückt ist. Durch Eindrücken des Druckknopfs 22 entgegen der Federkraft kann er um eine Achse 23 verdreht werden. Dabei kann er aus der dargestellten Verriegelungsstellung in eine um 90 Grad verdrehte Lösestellung überführt werden, in der der Verriegelungsbügel 19 in die nicht dargestellte Lösestellung bringbar ist. In dieser Lösestellung befindet sich der Verriegelungsbügel 19 außer Eingriff mit dem weiteren Widerlager 21.

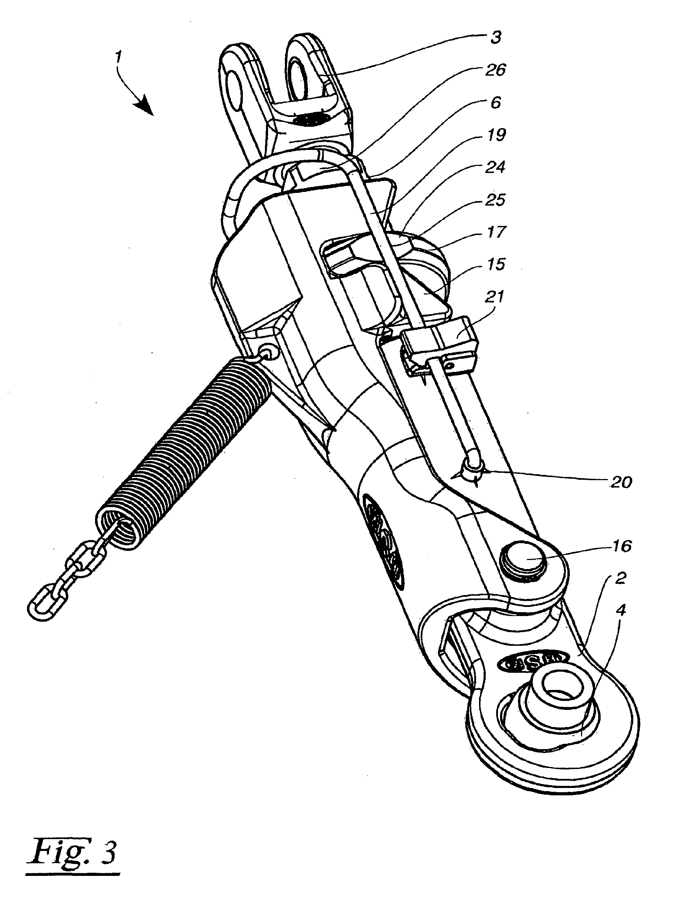

Die Figur 3 zeigt eine alternative Ausführungsform eines Stabilisators 1 gemäß Figur 1, wobei gleiche Bezugszeichen gleiche Teile benennen. Im Folgenden wird lediglich auf die Unterschiede zur Ausführungsform gemäß Figur 1 eingegangen.

Bei dieser Ausführungsform befindet sich die Achse 20 des Verriegelungsbügels 19 am Rohr 5 und kann nach oben verschwenkt werden. Der Verriegelungsbügel 19 umgreift das Widerlager 17 derart, dass das Widerlager 17 in der dargestellten Verriegelungsstellung nicht verdrehbar ist. Zu diesem Zweck besitzt das Widerlager 17 Abflachungen 24, in deren Mitte Einkerbungen 25 vorgesehen sind. In diese Einkerbungen 25 ist der Verriegelungsbügel 19 aufgenommen. Wirkt ein Drehmoment auf den Kolben 6, so wird dieser über das Widerlager 17 auf den Verriegelungsbügel 19 übertragen. Aufgrund der Abflachung 24 und der Einkerbung 25 müsste der Verriegelungsbügel 19 aufgespreizt werden, um diesem Drehmoment nachgeben zu können. Aufgrund seiner Stabilität und Bauart wird diese Aufspreizung jedoch verhindert, so dass eine Verdrehung des Kolbens 6 in dieser Verriegelungsstellung nicht möglich ist.

Der Verriegelungsbügel 19 ist durch das weitere Widerlager 21 in der dargestellten Verriegelungsstellung arretiert. Durch Betätigen dieses weiteren Widerlagers 21 kann der Verriegelungsbügel 19 frei um die Achse 20 verschwenkt werden. Dabei gerät er außer Eingriff mit dem Widerlager 17. Damit kann das Widerlager 17 und folglich auch der Kolben 6 bei geschlossenem Arretierbügel 15 verdreht werden.

Da mindestens vier Abflachungen 24 und Einkerbungen 25 am Widerlager 17 vorgesehen sind, ist eine feinfühligere Längenverstellung des Stabilisators 1 möglich als der Gewindesteigung des Innengewindes 12 und Außengewindes 13 entspricht.

Der Kolben weist außerdem vier Schlüsselflächen 26 auf. Diese Schlüsselflächen 26 dienen zur Verbindung mit einem nicht dargestellten Gabelschlüssel, um ein einfaches Verdrehen des Widerlagers 17 zu ermöglichen. Unter beengten Platzverhältnissen kann es vorkommen, dass eine volle Umdrehung des Gabelschlüssels nicht oder nur unter erschwerten Bedingungen möglich ist. Durch das Vorsehen von mindestens vier Schlüsselflächen kann der Schlüssel nach einer Drehung um 90° wieder neu an das nächste Paar Schlüsselflächen 26 angesetzt werden. Vorzugsweise wird der nicht dargestellte Gabelschlüssel über entsprechende Halter am Stabilisator 1 festgehalten, damit er zur Verstellung desselben sofort zur Hand ist. Als Halter ist insbesondere an einen Magnethalter gedacht.

### Bezugszeichenliste

- 1: Stabilisator
- 2: erstes Lager
- 3: zweites Lager
- 4: Kugel
- 5: Rohr
- 6: Kolben
- 7: Feder
- 8: Teleskop
- 9: erster Teil
- 10: zweiter Teil
- 11: Sackbohrung
- 12: Innengewinde
- 13: Außengewinde
- 14: Längsachse
- 15: Arretierbügel
- 16: Achse
- 17: Widerlager
- 18: Anschlagfläche
- 19: Verriegelungsbügel
- 20: Achse
- 21: weiteres Widerlager
- 22: Druckknopf
- 23: Achse
- 24: Abflachung
- 25: Einkerbung
- 26: Schlüsselfläche

## Patentansprüche

1. Stabilisator für einen Unter- und/oder Oberlenker einer Drei-Punkt-Aufhängung eines Ackerschleppers, wobei der Stabilisator (1) mindestens ein Teleskop (8), bestehend aus einem Rohr (5) und einem darin verschiebbar gehaltenen Kolben (6), aufweist, die miteinander durch mindestens eine Feder (7) elastisch gekoppelt sind, wobei der Kolben (6) durch mindestens ein Gewinde (12, 13) durch Drehen längenverstellbar ist, und am Rohr (5) mindestens ein Arretierbügel (15) schwenkbar gehalten ist, der in einer Arretierstellung mindestens ein Widerlager (17) des Kolbens (6) übergreift und in einer Lösestellung das Teleskops (8) frei bewegbar ist, wobei der Arretierbügel (15) das mindestens eine Widerlager (17) beidseitig übergreift, **dadurch gekennzeichnet, dass** das Widerlager (17) von mindestens einer im Wesentlichen rotationssymmetrischen Scheibe gebildet ist, so dass eine Verstellung der Kolbenlänge in oder nahe der Arretierstellung erfolgen kann, in der das Teleskop (8) arretiert ist.

2. Stabilisator nach Anspruch 1, **dadurch gekennzeichnet, dass** am Kolben (6) mindestens ein Verriegelungsbügel (19) angreift, der mit dem.Widerlager (17) oder einem weiteren Widerlager (21) des Rohres (5) oder Kolbens (6) zusammenwirkt, um eine Drehung des Kolbens (6) zu verhindern.

3. Stabilisator nach Anspruch 2, **dadurch gekennzeichnet, dass** der Verriegelungsbügel (19) in eine Betätigungsstellung verschwenkbar ist, so dass der Verriegelungsbügel (19) als Handhabe zum Verdrehen des Kolbens (6) verwendbar ist.

4. Stabilisator nach Anspruch 2 oder 3, **dadurch gekennzeichnet, dass** das weitere Widerlager (21) des Verriegelungsbügels (19) von einem federnd gehaltenen Druckknopf (22) gebildet ist, der nach außen federnd belastet ist und durch Druck nach innen verdrehbar ist.

5. Stabilisator nach Anspruch 4, **dadurch gekennzeichnet, dass** der Druckknopf (22) in eine Verriegelungsstellung bringbar ist, in der der Verriegelungsbügel (19) festgelegt ist und in eine Lösestellung bringbar ist, in der der Verriegelungsbügel (19) verschwenkbar ist.

6. Stabilisator nach Anspruch 2 oder 3, **dadurch gekennzeichnet, dass** das Widerlager (17) zur Aufnahme des Verriegelungsbügels (19) abgeflacht und/oder eingekerbt ist.

7. Stabilisator nach mindestens einen der Ansprüche 1 bis 6, **dadurch gekennzeichnet, dass** der Arretierbügel (15) mindestens eine Anschlagfläche (18) aufweist, die das Widerlager (17) des Kolbens (6) flächig erfasst.

8. Stabilisator nach Anspruch 7, **dadurch gekennzeichnet, dass** der Arretierbügel (15) mindestens zwei Anschlagflächen (18) aufweist, die das Widerlager (17) des Kolbens (6) beidseitig flächig erfassen.

9. Stabilisator nach mindestens einen der Ansprüche 1 bis 8, **dadurch gekennzeichnet, dass** der Arretierbügel (15) im Bereich des Widerlagers (17) des Kolbens (6) verstärkt ist.

10. Stabilisator nach mindestens einen der Ansprüche 1 bis 9, **dadurch gekennzeichnet, dass** der Verriegelungsbügel (19) gegenüber dem Kolben (6) verdrehbar und über mindestens eine Ratsche verbindbar ist.

11. Stabilisator nach mindestens einem der Ansprüche 1 bis 10, **dadurch gekennzeichnet, dass** am Kolben (6) mindestens zwei Schlüsselflächen (26) vorgesehen sind.

## Claims

1. Stabilizer for a lower link and/or upper link of a three-point suspension system of an agricultural tractor, wherein the stabilizer (1) has at least one telescope (8) consisting of a tube (5) and a piston (6) held displaceably therein, said tube and piston being coupled elastically to each other by at least one spring (7), wherein the piston (6) can be adjusted in length by rotation by means of at least one thread (12, 13), and at least one retaining clip (15) is mounted pivotably on the tube (5), said retaining clip, in a retaining position, engaging over at least one abutment (17) of the piston (6), and, in a release position, the telescope (8) being freely moveable, wherein the retaining clip (15) engages over the at least one abutment (17) on both sides, **characterized in that** the abutment (17) is formed by at least one substantially rotationally symmetrical disc, and therefore the piston length can be adjusted in or in the vicinity of the retaining position, in which the telescope (8) is retained.

2. Stabilizer according to Claim 1, **characterized in that** at least one locking clip (19) acts on the piston (6), said locking clip interacting with the abutment (17) or with a further abutment (21) of the tube (5) or piston (6) in order to prevent rotation of the piston (6).

3. Stabilizer according to Claim 2, **characterized in that** the locking clip (19) can be pivoted into an actuating position such that the locking clip (19) can be used as a handle for rotating the piston (6).

4. Stabilizer according to Claim 2 or 3, **characterized in that** the further abutment (21) of the locking clip (19) is formed by a resiliently held pushbutton (22) which is loaded resiliently outwards and can be rotated inwards by pressure.

5. Stabilizer according to Claim 4, **characterized in that** the pushbutton (22) can be brought into a locking position in which the locking clip (19) is secured, and can be brought into a release position in which the locking clip (19) can be pivoted.

6. Stabilizer according to Claim 2 or 3, **characterized in that** the abutment (17) is flattened and/or notched in order to receive the locking clip (19).

7. Stabilizer according to at least one of Claims 1 to 6, **characterized in that** the retaining clip (15) has at least one stop surface (18) which takes hold of the abutment (17) of the piston (6) in a planar manner.

8. Stabilizer according to Claim 7, **characterized in that** the retaining clip (15) has at least two stop surfaces (18) which take hold of the abutment (17) of the piston (6) in a planar manner on both sides.

9. Stabilizer according to at least one of Claims 1 to 8, **characterized in that** the retaining clip (15) is reinforced in the region of the abutment (17) of the piston (6).

10. Stabilizer according to at least one of Claims 1 to 9, **characterized in that** the locking clip (19) can be rotated in relation to the piston (6) and can be connected by at least one ratchet spanner.

11. Stabilizer according to at least one of Claims 1 to 10, **characterized in that** at least two spanner surfaces (26) are provided on the piston (6).

## Revendications

1. Stabilisateur pour un bras inférieur et/ou un bras supérieur d'une suspension à trois points d'un tracteur agricole, le stabilisateur (1) présentant au moins un télescope (8) constitué d'un tube (5) et d'un piston (6) retenu de manière à pouvoir coulisser dans celui-ci, lesquels sont accouplés élastiquement l'un à l'autre par au moins un ressort (7), le piston (6) pouvant être réglé en longueur par rotation par au moins un filetage (12, 13) et au moins un étrier de blocage (15) étant retenu de manière pivotante sur le tube (5), lequel étrier de blocage vient en prise par le dessus avec au moins une butée (17) du piston (6) dans une position de blocage et le téléscope (8) étant librement déplaçable dans une position de libération, l'étrier de blocage (15) venant en prise par le dessus des deux côtés avec l'au moins une butée (17), **caractérisé en ce que** la butée (17) est formée par au moins un disque ayant sensiblement une symétrie de révolution, de telle sorte qu'un réglage de la longueur du piston puisse avoir lieu dans ou à proximité de la position de blocage dans laquelle le télescope (8) est bloqué.

2. Stabilisateur selon la revendication 1, **caractérisé en ce qu'**au moins un étrier de verrouillage (19) vient en prise sur le piston (6), lequel étrier de verrouillage coopère avec la butée (17) ou avec une butée supplémentaire (21) du tube (5) ou du piston (6), afin d'empêcher une rotation du piston (6).

3. Stabilisateur selon la revendication 2, **caractérisé en ce que** l'étrier de verrouillage (19) peut pivoter dans une position d'actionnement de telle sorte que l'étrier de verrouillage (19) puisse être utilisé en tant que manette pour faire tourner le piston (6).

4. Stabilisateur selon la revendication 2 ou 3, **caractérisé en ce que** la butée supplémentaire (21) de l'étrier de verrouillage (19) est formée par un bouton-poussoir (22) retenu élastiquement, lequel est sollicité élastiquement vers l'extérieur, et peut tourner vers l'intérieur sous l'effet d'une pression.

5. Stabilisateur selon la revendication 4, **caractérisé en ce que** le bouton-poussoir (22) peut être amené dans une position de verrouillage dans laquelle l'étrier de verrouillage (19) est fixé et peut être amené dans une position de libération dans laquelle l'étrier de verrouillage (19) peut pivoter.

6. Stabilisateur selon la revendication 2 ou 3, **caractérisé en ce que** la butée (17) pour recevoir l'étrier de verrouillage (19) est aplatie et/ou encochée.

7. Stabilisateur selon au moins l'une quelconque des revendications 1 à 6, **caractérisé en ce que** l'étrier de blocage (15) présente au moins une surface de butée (18) qui vient en prise à plat contre la butée (17) du piston (6).

8. Stabilisateur selon la revendication 7, **caractérisé en ce que** l'étrier de blocage (15) présente au moins deux surfaces de butée (18) qui viennent en prise à plat des deux côtés contre la butée (17) du piston (6).

9. Stabilisateur selon au moins l'une quelconque des revendications 1 à 8, **caractérisé en ce que** l'étrier de blocage (15) est renforcé dans la région de la butée (17) du piston (6).

10. Stabilisateur selon au moins l'une quelconque des revendications 1 à 9, **caractérisé en ce que** l'étrier de verrouillage (19) peut tourner par rapport au piston (6) et peut être connecté par le biais d'au moins un cliquet.

11. Stabilisateur selon au moins l'une quelconque des revendications 1 à 10, **caractérisé en ce qu'**au moins deux méplats (26) sont prévus sur le piston (6) .
